Europäisches Patentamt

European Patent Office

Office européen des brevets

(11) Numéro de publication: **0 502 803 B1**

# FASCICULE DE BREVET EUROPEEN

(45) Date de publication de fascicule du brevet: **01.02.95** (51) Int. Cl.⁶: **G01G 19/02**, G08G 1/02

(21) Numéro de dépôt: **92470009.9**

(22) Date de dépôt: **04.03.92**

(54) **Procédé et dispositif de mesure de charges dynamiques générées par des véhicules sur une chaussée.**

(30) Priorité: **04.03.91 FR 9102698**

(43) Date de publication de la demande:
**09.09.92 Bulletin 92/37**

(45) Mention de la délivrance du brevet:
**01.02.95 Bulletin 95/05**

(84) Etats contractants désignés:
**BE DE ES GB IT NL**

(56) Documents cités:
**EP-A- 0 287 250**
**FR-A- 2 549 625**
**FR-A- 2 575 827**
**FR-A- 2 625 808**
**US-A- 4 813 004**

(73) Titulaire: **ELECTRONIOUE CONTROLE MESU-
RE**
**4 rue du bois chêne le loup**
**Parc d'activités de brabois**
**F-54500 Vandoeuvre les Nancy (FR)**

(72) Inventeur: **Maeder, Claude**
**19 bis rue des Brice**
**F-54000 Nancy (FR)**
Inventeur: **Nicolle, Marc**
**Benney**
**F-54740 Haroue (FR)**

## Description

La présente invention se rapporte à un procédé de traitement numérique de signaux fournis par des capteurs piézo-électriques implantés dans une chaussée pour permettre une mesure efficace des charges dynamiques appliquées par le trafic à la chaussée.

Les techniques de réalisation, de préfabrication et de pose de capteurs piézo-électriques sont connues et font l'objet d'un certain nombre de brevets. Ces techniques peuvent employer des capteurs coaxiaux utilisant des céramiques comme élément piézo-électrique ou des capteurs à éléments coaxiaux utilisant les polymères (P.V.D.F. ou autres) comme élément piézo-électrique ou encore des éléments plans présentés sous forme de film polymère.

Dans tous les cas ci-dessus, le traitement du signal revêt une importance considérable pour l'obtention d'une mesure de la charge dynamique appliquée par les essieux.

Les traitements de signal connus actuellement sont, soit des traitements par mesure de tension, 0-crête positive, soit crête-crête, soit des intégrations analogiques comme dans FR-A-2 575 827 ou utilisant des amplificateurs de charge ; aucun ne tient compte compte de variation de réponse de la chaussée entrainant des modifications de forme du signal ni d'étalonnage automatique, ni des effets de pneumatiques sous-gonflés...

La présente invention a pour buts, la suppression de tous les réglages nécessaires avec les concepts antérieurs, l'amélioration du traitement du signal en prenant en compte les effets dûs à la chaussée, aux résines de pose, aux pneumatiques et à la vitesse ainsi que de réaliser un étalonnage automatique permanent de la pesée à partir de véhicules caractéristiques.

D'autres caractéristiques et avantages apparaitront au cours de la description qui va suivre.

Les figures qui suivent, données à titre d'exemple, permettent de mieux comprendre le problème et l'invention proposée.

* La figure 1 représente les différentes dispositions de capteurs proposées pour effectuer les mesures.
* La figure 2 représente la forme des signaux en fonction de la rigidité mécanique de la chaussée.
* La figure 3 représente la forme du signal en fonction du gonflage des pneumatiques.
* La figure 4 représente la forme des signaux en fonction de l'impédance d'entrée choisie.
* La figure 5 représente le chronogramme du passage d'un véhicule sur une station constituée par une boucle et 2 capteurs piézo-électriques.

* La figure 6 représente un des tableaux de classification possible.
* La figure 7 représente la répartition de charge souhaitable des essieux caractéristiques des véhicules caractéristiques.
* La figure 8 représente le schéma fonctionnel de traitement du signal suivant l'invention.
* La figure 9 représente l'effet de la correction automatique du gain de l'amplificateur d'entrée suivant l'invention.
* La figure 10 représente la méthode de détermination de la surface utile du signal permettant de déterminer le poids dynamique du véhicule suivant l'invention.

La figure 11 représente le traitement global des signaux issus d'une voie de circulation équipée d'une boucle et de 2 capteurs suivant l'invention.

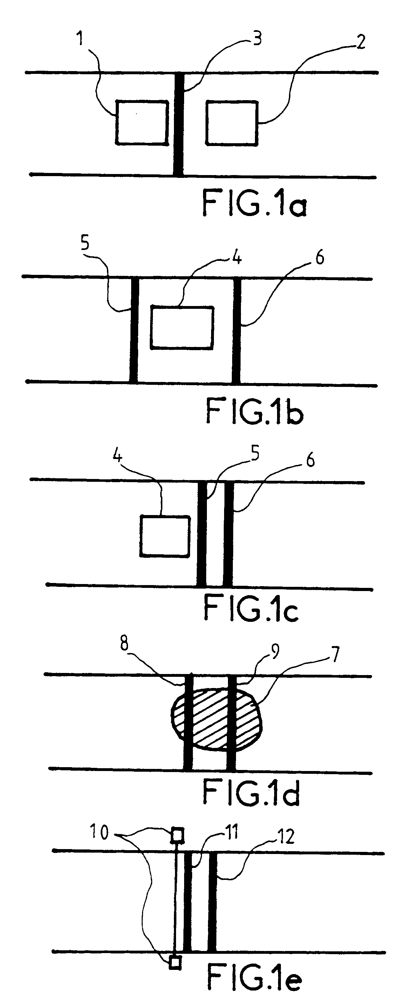

A la figure 1a, on utilise deux boucles à induction et un capteur piézo-électrique pour effectuer les mesures.

La vitesse est mesurée par le temps qui s'écoule entre l'activation des 2 boucles (1 & 2); la pesée est obtenue par traitement du signal d'un seul capteur piézo-électrique (3).

Aux figures 1b et 1c, on utilise une boucle (4) pour déterminer la présence du véhicule et 2 capteurs piézo-électriques (5 et 6) pour les mesures de vitesse et de poids dynamique. Cette configuration présente les avantages suivants :

- Mesure de vitesse indépendante de la hauteur du véhicule et des conditions météorologiques due à la variation du volume de détection de la boucle à induction (4).

- double pesée à l'aide du traitement des signaux des capteurs (5 et 6) donc amélioration de la précision.

A la figure 1d, la détection de véhicule est effectuée par un système volumétrique 7 type détecteur à ultra-sons, à effet Doppler (radar) ou à infrarouge en remplacement de la boucle à induction (4).

A la figure 1e, la détection de véhicule est effectuée par un séparateur de véhicule (10) du type de ceux utilisés dans les péages d'autoroutes par exemple barrière à infrarouge, barrière à micro-ondes, ou système de caméra CCD linéaire ou autre, la pesée étant réalisé par le traitement des signaux des capteurs 11 et 12

Dans les figures 1b, c, d et e, la pesée est améliorée par rapport à la figure 1a, grâce à une meilleure mesure de vitesse et à une double pesée.

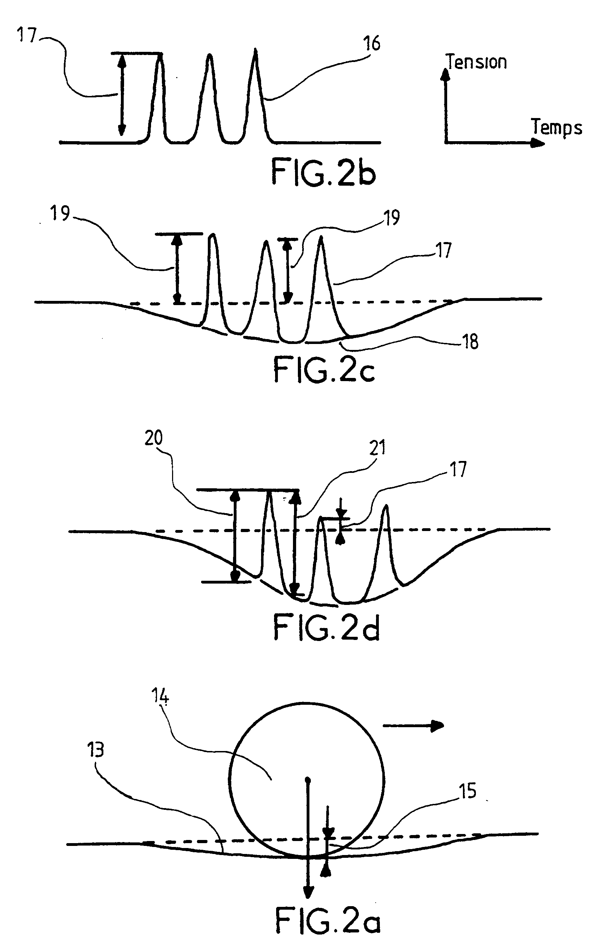

La figure 2a montre la déformation (15) de la chaussée (13) due à l'effet d'un essieu pesant (14). Cette déformation peut être accentuée en fonction du type de chaussée et du poids des essieux.

Cette déformation de la chaussée progresse avec l'essieu. Elle créera donc une déformation du support du capteur avant l'attaque du capteur par l'essieu.

Cette déformation se caractérisera par l'apparition d'un signal négatif avant celui relatif au passage de l'essieu sur le capteur.

La figure 2b montre les signaux qui seraient obtenus sur une chaussée indéformable se rapprochant du comportement des chaussées en béton armé épais sur sous-couche rigide lors du passage d'un essieu triple.

La figure 2c montre les signaux (17) qui seraient obtenus sur une chaussée semi-rigide. Les signaux relatifs aux essieux (16) se superposent à la déformation de la chaussée (18).

Il en est de même à la figure 2d où la déformation est telle que la partie positive du signal de l'essieu central est quasiment inexistante.

Les 3 figures 2b, c et d, mettent en évidence les erreurs entrainées par une mesure de poids par la valeur de la tension 0-crête positive (19) du signal (17) ou la nécessité de limiter les mesures aux chaussées très rigides comme l'indique la forme du signal (16) et la valeur (17).

Elles mettent également en évidence la difficulté de faire une mesure de tension crête-crête en prenant, soit la valeur (20), soit la valeur (21) comme le montre la figure 2d.

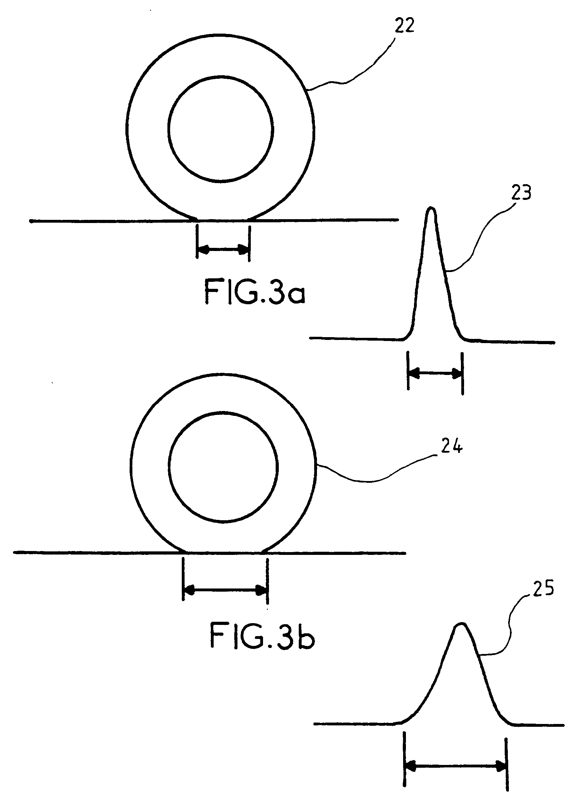

Les figures 3a et b, mettent en évidence la forme des signaux recueillis (23 & 25) pour deux essieux identiques ayant des pneus gonflés (23) en 3a et des pneus dégonflés en 3b. Les mesures montrent qu'à vitesse et charge constantes lorsque le pneu est dégonflé, la durée du signal est plus grande et la valeur crête plus faible.

Ces deux schémas montrent que la mesure par amplitude n'est pas correctement fondée et qu'il n'est pas suffisant de tenir compte de la durée de l'impulsion pour effectuer une correction de vitesse. La durée de cette impulsion étant dépendante du gonflage du pneumatique.

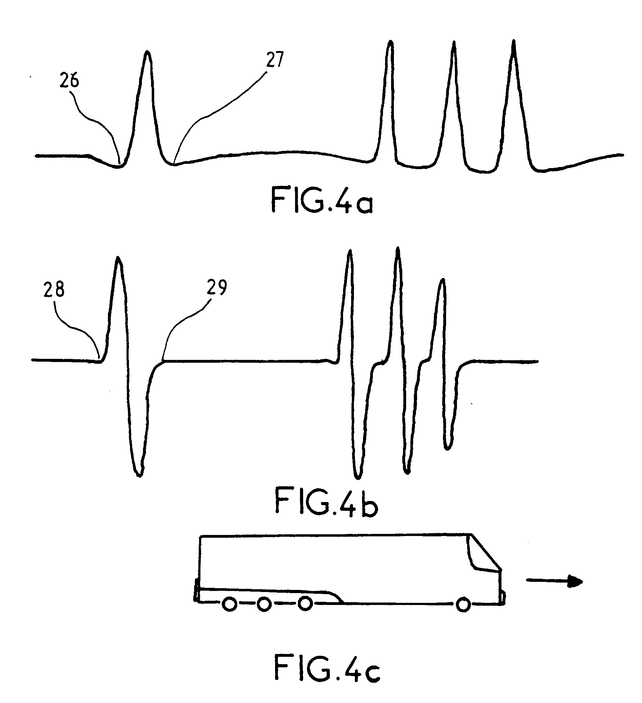

Les figures 4a et b, montrent l'influence de l'adaptation d'impédance ; une grande impédance d'entrée (environ 10 à 50 M Ohms) permettra d'obtenir un signal tel que décrit à la figure 4a ; une faible impédance d'entrée de l'ordre de 40 à 100 K Ohms permettra d'obtenir un signal quasi-symétrique comme indiqué à la figure 4b. Dans le premier cas, le poids dynamique du véhicule sera représenté par l'intégrale simple de la courbe entre les deux inversions des signaux (26 & 27)- dans le second cas par l'intégrale double du signal entre les points 28 et 29.

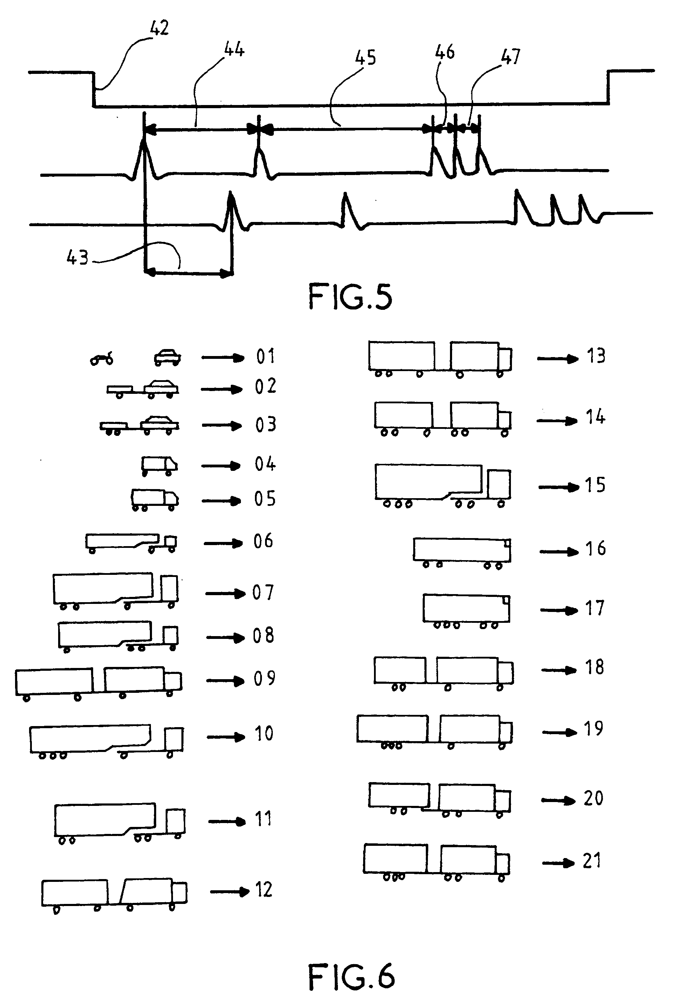

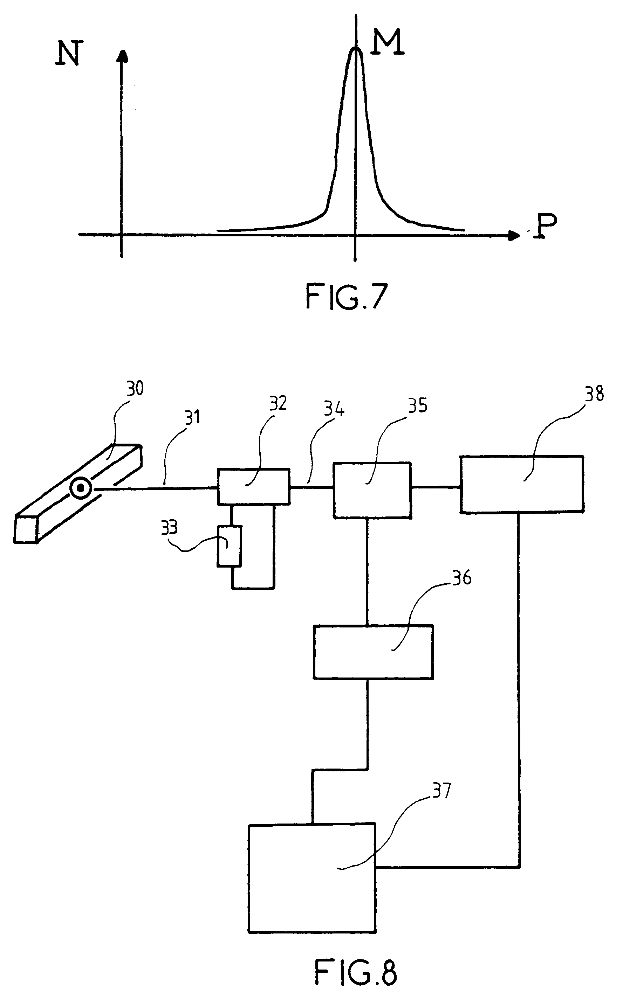

Une étude statistique détaillée des mesures de poids statique d'un grand nombre de véhicules, permet de mettre en évidence l'existence de véhicule que nous qualifierons de "véhicule caractéristique" ; le tableau de classification de la figure 6 et la courbe de la figure 7 permettent de mieux expliquer le système. L'analyse statistique mentionnée ci-dessus, met en évidence pour une ou plusieurs classes de véhicules, une corrélation entre le poids d'un essieu et le poids total des véhicules. Cette corrélation peut être très simple ou linéaire. Par exemple, on trouve en France une répartition (fig.7) du poids du premier essieu des véhicules de catégorie 10 suivant tableau de la figure 6 centrée sur 6,08t pour des véhicules chargés à plus de 35t.

L'écart type de la répartition sur le premier essieu est de 300 kg. Ce type de véhicule sera utilisé pour réaliser un étalonnage automatique permanent.

La présente invention a pour objet de proposer un traitement complet du signal, permettant de résoudre l'ensemble des problèmes énoncés ci-dessus, en apportant le maximum de fiabilité dans le temps et le maximum d'automaticité.

La figure 8 décrit le principe selon l'invention. Un capteur piézo-électrique (30) est relié par un câble (31) à un circuit d'adaptation d'impédance (32) dont le valeur d'adaptation est modifiable par l'élément (33) ; une faible impédance d'entrée permettra d'obtenir un signal symétrique du genre de celui de la figure 4a ; une forte impédance d'entrée permettra d'obtenir un signal du type de celui de la figure 4b. Le signal est ensuite transmis par le conducteur (34) vers un amplificateur à gain variable (35). Il est ensuite échantillonné et chaque valeur est convertie par un convertisseur analogique digital (36) dont les valeurs sont lues par une micro-structure (37) programmée. Cette micro-structure (37) peut agir sur le coefficient d'amplification de (35) par un système (38) pour accroître ou diminuer le gain.

L'impédance d'entrée détermine la méthode de calcul de la valeur de base du poids dynamique Po ; pour une faible impédance, on calculera l'intégrale double entre 26 et 27 suivant figure 4a et pour une forte impédance, l'intégrale simple entre les 2 points de la courbe suivant figure 4b.

L'impédance d'entrée fige le traitement de base du signal.

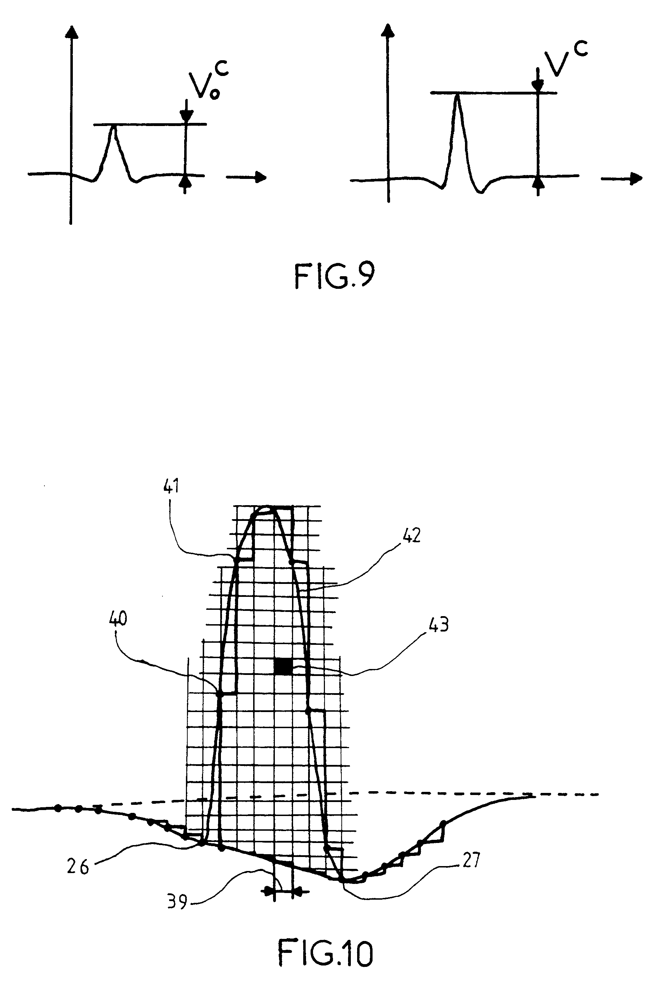

Dans la suite, nous prenons l'exemple de la haute impédance d'entrée. Le coefficient d'amplification sera déterminé de manière à utiliser au mieux les possibilités du convertisseur dans sa gamme de tension. On fera en sorte que la valeur crête positive de la moyenne des signaux relatifs à un nombre donné d'essieux caractéristiques, soit située à une valeur Vc. Cette valeur entrainant par exemple une saturation de l'amplificateur (35) pour un essieu de 18 ou 20 tonnes ; la figure 9 représente une amplification avec un coefficient K.

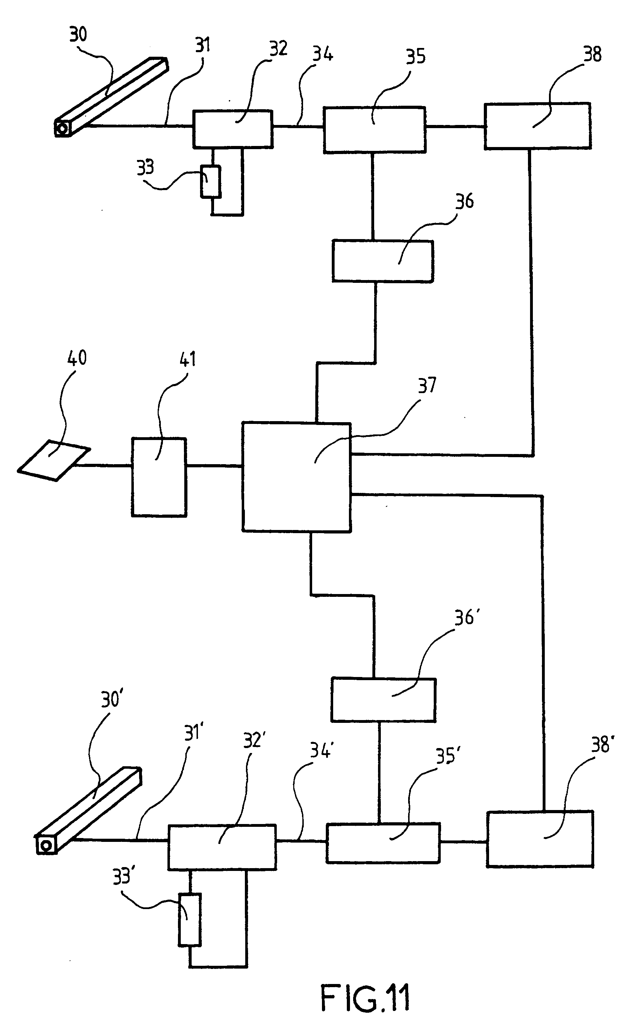

La méthode d'échantillonnage, conversion et intégration, est décrite à la figure 10. La fréquence d'échantillonnage déterminant la durée (30) sera de manière classique supérieure ou égale à 50 fois celle du signal à digitaliser et permettra de déterminer les points 40, 41 de la courbe 42.

Le convertisseur analogique digital permettra d'affecter une valeur à chacun de ces points. La sommation de l'ensemble de ces valeurs entre les points 26 et 27 permettre de calculer le poids d'origine Po de l'essieu. En fait, on aura ajouté un certain nombre de "carrés élémentaires" (43) les uns aux autres pour calculer le poids d'origine Po. Le "carré élémentaire" sera l'espace compris entre deux temps d'échantillonnage et un pas du convertisseur de tension.

On obtiendra donc une valeur de Po égale à un certain nombre "q" de "carrés élémentaires" Ce (43).

$$Po = q\ Ce$$

Le système effectue ensuite une correction en fonction de le vitesse à l'aide d'une formule linéaire ou non linéaire pour obtenir un valeur P'o.

$$P'o = \frac{Po}{f(V)}$$

Une seconde correction sera ensuite effectuée en fonction du gain K de l'amplificateur pour obtenir une troisième valeur P''o.

$$P''o = K\ \frac{Po}{f(V)}$$

Une troisième correction sera ensuite effectuée à partir des poids des essieux caractéristiques des véhicules caractéristiques de manière à ce que la moyenne des poids de N essieux caractéristique soit égale à la valeur moyenne du poids de l'essieu caractéristique PEC de l'étude statistique des poids statiques des véhicules caractéristiques

$$\alpha\ \sum_{i=1}^{N}\ P''o_{i\ caract} = PEC$$

qui permet de déterminer périodiquement le valeur de $\alpha$.

Le poids final d'un essieu sera :

$$P'''o = P''o \times \alpha$$

ou

$$P'''o = K\ \frac{Po}{f(V)}\ \alpha$$

$$P'''o = K\ q\ \frac{Ce}{f(V)}\ \alpha$$

Il apparait clairement que le coefficient d'amplification et la valeur de Ce sont liés. Si K croît de 20 % pour compenser un abaissement de la réponse électrique de l'ensemble capteur-chaussée-résine, $\alpha$ devra baisser de 20 % pour obtenir le même poids pour un essieu donné à vitesse donnée.

La procédure de détermination d'étalonnage automatique fonctionnera en permanence et permettra de tenir compte de l'ensemble chaussée-résine-capteur en fonction des conditions ambiantes de température humidité,....

La vitesse pourra être déterminée comme le montre les figures 1b,c,d, 5 et 11, à l'aide d'une boucle à induction et de deux capteurs piézo-électriques.

La boucle à induction 40 sera reliée à un détecteur de boucle 41 fournissant suivant fig.5 un signal de présence de véhicule 42 adressé à la micro-structure (37) directement ou par un interface. Les capteurs piézo-électriques 30 et 30' seront reliés à la micro-structure (37) par deux systèmes identiques à ceux décrits ci-dessus, constitués des adaptateurs d'impédance 32 et 32' avec réglage externe 33 et 33' des amplificateurs à gain variable 35 et 35' des échantillonneurs convertisseurs 36 et 36' et des correcteurs de coefficient d'amplification 37 et 37'.

La micro-structure 37 déterminera la vitesse du véhicule à l'aide du temps 43 fig.5 et de la connaissance de la distance entre les capteurs 30 et 30'. La géométrie du véhicule sera déterminée par les temps 44, 45, 46, 47 et la connaissance de la vitesse.

Le poids des essieux sera déterminé pour chaque capteur de la manière indiquée ci-dessus, ce qui augmentera la précision sous réserve que les conditions de roulage soient correctes.

D'autres réalisations suivant la description ci-dessus peuvent être faites par exemple, avec des micro-structures électriques non programmées.

**Revendications**

1.  Procédé de mesure de charges dynamiques générées par les essieux d'un véhicule lors de son passage sur un ou deux capteurs à effet piézo-électrique implantés perpendiculairement au déplacement des véhicules dans ou sur une chaussée caractérisée en ce que le signal fourni par au moins un des capteurs fait l'objet après adaptation d'impédance, d'une amplification à gain piloté, d'une intégration simple ou double en fonction de l'adaptation de l'impédance d'entrée, que la valeur ainsi trouvée est corrigée en fonction de la vitesse du véhicule et par un coefficient d'étalonnage obtenu soit par passage d'un véhicule de poids connu, soit par traitement statistique des poids de plusieurs véhicules dits caractéristiques dont la répartition des poids totaux ou du poids d'un essieu donné ont un très faible écart type et une valeur moyenne constante et que l'ensemble des calculs est réalisé par une micro-structure programmée.

2. Procédé suivant revendication 1, caractérisé en ce que la valeur du coefficient d'amplification est déterminée par la micro-structure à partir du signal émis par un groupe d'essieux caractéristiques dont on connait statistiquement la valeur moyenne et dont l'écart type est faible.

3. Procédé suivant revendication 1, caractérisé en ce que la valeur du coefficient d'amplification est déterminée par la micro-structure à partir du signal émis par au moins un essieu de poids connu.

4. Procédé suivant revendication 2 ou 3, caractérisé en ce que le coefficient d'amplification a une valeur calculée pour que la charge dynamique maximale mesurable soit inférieure à une valeur pré-déterminée.

5. Procédé suivant revendication 1, caractérisé en ce que le traitement comportera une intégration simple du signal pour une grande impédance d'entrée comprise entre 10 et 50 M Ohms.

6. Procédé suivant revendication 1, caractérisé en ce que le traitement comportera une double intégration pour une faible impédance d'entrée comprise entre 40 et 100 K Ohms.

7. Procédé suivant revendication 1 caractérisé en ce que le coefficient d'étalonnage permettant de calculer le poids des essieux à partir de l'intégration du signal corrigée par la vitesse est obtenu en faisant passer un véhicule dont les poids des essieux sont connus.

8. Procédé suivant revendication 1 caractérisé en ce que le coefficient d'étalonnage est obtenu à partir de la valeur moyenne des poids de plusieurs essieux caractéristiques dont la répartition statistique sensiblement constante dans le temps est connue et de faible écart type.

9. Procédé suivant revendication 1 caractérisé en ce que le coefficient d'étalonnage est obtenu à partir de la valeur moyenne des poids de plusieurs véhicules caractéristiques dont la répartition statistique sensiblement constante dans le temps est connue et de faible écart type.

10. Procédé suivant revendication 1, caractérisé en ce que la correction en fonction de la vitesse est linéaire ou non.

11. Procédé suivant revendication 1, caractérisé en ce que le coefficient d'étalonnage servant de base du calcul du poids varie de manière opposée à celle du coefficient d'amplification mais de la même proportion.

12. Dispositif pour la mise en oeuvre du procédé selon une quelconque des revendications 1 à 11, caractérisé en ce que le traitement du signal est effectué sur un capteur (30) par un adaptateur d'impédance (32 + 33), un amplificateur à gain variable (35), un convertisseur analogique-numérique (36) et un microprocesseur (37), ledit microprocesseur pilotant l'amplificateur (35) au moyen de l'interface (38) à partir de calculs effectués sur l'amplitude du signal.

13. Dispositif suivant revendication 12 caractérisé en ce qu'il comprend un moyen de détection de l'enveloppe du véhicule tel que boucle à induction (4), détecteur volumétrique (7), barrière optique (10), ou tout autre moyen connu associé à au moins deux capteurs.

14. Dispositif suivant revendication 12 et 13, caractérisé en ce qu'il comprend une boucle à induction (30) et son détecteur (41), déterminant l''enveloppe du véhicule pour le microprocesseur (37) et au moins deux capteurs piézo-électriques (30 et 30'), associés respectivement à des adaptateurs d'impédance (32-33 et 32'-33'), suivis d'amplificateurs à gains variables (35 et 35'), de convertisseurs analogiques-numériques (36 et 36') et un microprocesseur (37), ledit microprocesseur pilotant indépendamment l'un de l'autre, les amplificateurs (35 et 35') par les interfaces (38 et 38').

**Claims**

1. Process for the measurement of dynamic loads generated by the axles of a vehicle during its passage over one or two piezo-electric effect sensors implanted perpendicular to the movement of vehicles in or on a roadway, characterized in that the signal provided by at least one of the sensors, after impedance matching, undergoes controlled gain amplification and single or double integration depending on the input impedance matching, furthermore that the value thus found is corrected in relation to the speed of the vehicle, and by a calibration coefficient obtained either by the passage of a vehicle of known weight, or by statistical processing of the weight of several vehicles termed characteristic whose total weight distribution or that of the weight of one given axle has a very low standard deviation and a constant average value, and that all the calculations are carried out by a programmed micro-structure.

2. Process as per claim 1, characterized in that the value of the amplification coefficient is determined by the micro-structure from a signal emitted by a group of characteristic axles for which the average value is known statistically and whose standard deviation is low.

3. Process as per claim 1, characterized in that the value of the amplification coefficient is determined by the micro-structure from a signal emitted by at least one axle of known weight.

4. Process as per claim 2 or 3, characterized in that the amplification coefficient has a calculated value such that the maximum measurable dynamic load is less than a pre-determined value.

5. Process as per claim 1, characterized in that the processing includes single signal integration for a high input impedance of between 10 and 50 MOhms inclusive.

6. Process as per claim 1, characterized in that the processing includes dual integration for a low input impedance of between 40 and 100 KOhms inclusive.

7. Process as per claim 1, characterized in that the calibration coefficient enabling the weight of axles to be calculated from the integration of the speed corrected signal is obtained by the passage of a vehicle whose axle weights are known.

8. Process as per claim 1, characterized in that the calibration coefficient is obtained from the average value of the weights of several characteristic axles for which the statistical distribution, which remains firmly constant with time, is known and of low standard deviation.

9. Process as per claim 1, characterized in that the calibration coefficient is obtained from the average weight value of several characteristic vehicles for which the statistical distribution, which remains firmly constant with time, is known and of low standard deviation.

10. Process as per claim 1, characterized in that the correction depending on the speed is linear or not.

11. Process as per claim 1, characterized in that the calibration coefficient serving as the basis of the weight calculation varies in an opposite manner to that of the amplification coefficient but in the same proportion.

12. Device for running the process according to any one of the claims 1 to 11, characterized in that the signal processing is performed on a sensor (30) by an impedance matching device (32 + 33), a variable gain amplifier (35), an analog to digital converter (36), and a micro-processor (37), the said micro-processor driving the amplifier (35) by means of the interface (38) from the calculations performed on the signal amplitude.

13. Device as per claim 12, characterized in that it includes a means of detecting the envelope of the vehicle such as an induction loop (4), a volumetric detector (7), an optical barrier (10), or any other known means, associated with at least two sensors.

14. Device as per claims 12 and 13, characterized in that it includes an induction loop (30) and its detector (41) determining the envelope of the vehicle for the micro-processor (37), and at least two piezo-electric sensors (30 and 30') respectively associated with the impedance matching devices (32-33 and 32'-33'), followed by variable gain amplifiers (35 and 35'), analog to digital converters (36 and 36'), and a micro-processor (37), the said micro-processor independently driving the amplifiers (35 and 35') by means of the interfaces (38 and 38').

**Patentansprüche**

1. Verfahren zur Messung von dynamischen Lasten, welche durch das Befahren der Achsen eines Fahrzeugs über einen oder zwei auf oder in einer Fahrbahn quer zur Fahrtrichtung angebrachten piezoelektrischen Geber erzeugt werden, dadurch gekennzeichnet daß das von zumindest einem der Geber gelieferte Signal, nach einer Impedanzanpassung, eine gesteuerte Verstärkung, eine - je nach Eingangsimpedanzanpassung - einfache oder doppelte Integration erfährt, daß der so ermittelte Wert in Abhängigkeit der Geschwindigkeit des Fahrzeugs und durch einen Eichungsfaktor korrigiert wird, deren Ermittelung erfolgt entweder durch das Befahren eines Fahrzeugs von bekanntem Gewicht oder durch statistische Verarbeitung der Gewichte von mehreren sogenannten charakteristischen Fahrzeugen deren Verteilung der Gesamtgewichte oder des Gewichts einer bestimmten Achse eine sehr geringe Standardabweichung und einen konstanten Mittelwert aufweist, und daß alle Berechnungen durch eine programmierte Mikrostruktur durchgeführt werden.

2. Verfahren nach Anspruch 1, dadurch gekennzeichnet daß die Bestimmung des Werts des Verstärkungsfaktors auf der Basis des von einer Gruppe von charakteristischen Achsen mit statistisch bekanntem Mittelwert und geringer Standardabweichung erzeugten Signals durch die Mikrostruktur erfolgt.

3. Verfahren nach Anspruch 1, dadurch gekennzeichnet daß die Bestimmung des Werts des Verstärkungsfaktors auf der Basis des von zumindest einer Achse mit bekanntem Gewicht erzeugten Signals durch die Mikrostruktur erfolgt.

4. Verfahren nach Anspruch 2 oder 3, dadurch gekennzeichnet daß der berechnete Wert des Verstärkungsfaktors so ausgelegt wird, daß die maximale meßbare dynamische Last einen vorgegebenen Wert nicht überschreitet.

5. Verfahren nach Anspruch 1, dadurch gekennzeichnet daß die Verarbeitung eine einfache Integration des Signals bei einer großen Eingangsimpedanz von 10 bis 50 Mohm vorsieht.

6. Verfahren nach Anspruch 1, dadurch gekennzeichnet daß die Verarbeitung eine doppelte Integration des Signals bei einer geringen Eingangsimpedanz von 40 bis 100 kohm vorsieht.

7. Verfahren nach Anspruch 1, dadurch gekennzeichnet daß der Eichungsfaktor, welcher die Berechnung des Gewichts der Achsen auf der Basis der durch die Geschwindigkeit korrigierte Integration des Signals ermöglicht, durch das Befahren eines Fahrzeugs von bekanntem Achsengewicht ermittelt wird.

8. Verfahren nach Anspruch 1, dadurch gekennzeichnet daß die Ermittlung des Eichungsfaktors auf der Basis des Mittelwerts der Gewichte von mehreren charakteristischen Achsen mit einer zeitlich annähernd konstanten bekannten statistischen Verteilung und einer geringen Standardabweichung erfolgt.

9. Verfahren nach Anspruch 1, dadurch gekennzeichnet daß die Ermittlung des Eichungsfaktors auf der Basis des Mittelwerts der Gewichte von mehreren charakteristischen Fahrzeugen mit einer zeitlich annähernd konstanten bekannten statistischen Verteilung und einer geringen Standardabweichung erfolgt.

10. Verfahren nach Anspruch 1, dadurch gekennzeichnet daß die geschwindigkeitsabhängige Korrektur linear oder nicht linear ist.

11. Verfahren nach Anspruch 1, dadurch gekennzeichnet daß der als Basis der Berechnung des Gewichts verwendete Eichungsfaktor entgegengesetzt zum Verstärkungsfaktor, jedoch im gleichen Verhältnis variiert

12. Vorrichtung zur Anwendung des Verfahrens nach einem beliebiegen der vorgenannten Ansprüche 1 bis 11, dadurch gekennzeichnet daß die Signalverarbeitung auf einem Geber (30) durch eine Impedanzanpassungseinrichtung (32 + 33), einen Verstärker mit veränderlichem Verstärkungsfaktor (35), einen Analog-Digital-Umsetzer (36) und einen Mikroprozessor (37) erfolgt, welcher den Verstärker (35) über die Schnittstelle (38) auf der Basis der bezüglich der Amplitude des Signals durchgeführten Berechnungen steuert.

13. Vorrichtung nach Anspruch 12, dadurch gekennzeichnet daß sie eine Einrichtung zur Erfassung der Außengrenzen des Fahrzeugs einschließt, wie zum Beispiel eine Induktionsschleife (4), einen Volumensensor (7), eine Lichtschranke (10) oder irgendeine andere bekannte Einrichtung, welche mit mindestens zwei Gebern gekoppelt ist.

14. Vorrichtung nach Ansprüchen 12 und 13, dadurch gekennzeichnet daß sie eine Induktionsschleife (30) samt Geber (41) einschließt, welche für den Mikroprozessor (37) die Außengrenzen des Fahrzeugs erfaßt, sowie zumindest zwei piezoelektrische Geber (30 und 30') jeweils gekoppelt mit Impedanzanpassungseinrichtungen (32-33 und 32'-33'), denen nachgeschaltet sind zwei Verstärker min veränderlichen Verstärkungsfaktoren (35 und 35') zwei-Analog-Digital-Umsetzer (36 und 36') und ein Mikroprozessor (37), welcher die Verstärker (35 und 35') über die Schnittstellen (38 und 38') unabhängig voneinander steuert.

FIG.1a

FIG.1b

FIG.1c

FIG.1d

FIG.1e

17

16

Tension

Temps

FIG.2b

19

19

17

18

FIG.2c

20

21

17

FIG.2d

14

13

15

FIG.2a

FIG.3a

FIG.3b

FIG.4a

FIG.4b

FIG.4c

FIG.5

01
02
03
04
05
06
07
08
09
10
11
12
13
14
15
16
17
18
19
20
21

FIG.6

FIG.7

FIG.8

FIG.9

FIG.10

FIG.11